# EUROPÄISCHE PATENTSCHRIFT

(11) **EP 4 028 145 B1**
(45) Veröffentlichungstag und Bekanntmachung des Hinweises auf die Patenterteilung: **01.11.2023**
(21) Anmeldenummer: 20789485.8
(22) Anmeldetag: 29.09.2020
(51) Int. Cl.: B01D 53/00, F01K 25/00, F22B 1/00, B01D 53/26, B01D 53/86, C01B 3/50, C25B 1/04, C25B 9/00, H01M 8/04082, H01M 8/0656, C25B 15/08, C25B 15/021, H01M 8/04119

(54) **POWER-TO-X-ANLAGE MIT OPTIMIERTER WASSERSTOFFTROCKNUNG UND REINIGUNG**
POWER-TO-X SYSTEM WITH AN OPTIMIZED HYDROGEN DRYING AND PURIFYING PROCESS
SYSTÈME POWER-TO-X AVEC UN PROCESSUS DE SÉCHAGE ET DE PURIFICATION D'HYDROGÈNE OPTIMISÉ

(30) Priorität: 06.11.2019 DE 102019217114
(43) Veröffentlichungstag der Anmeldung: 20.07.2022
(73) Patentinhaber: Siemens Energy Global GmbH & Co. KG, 81739 München (DE)
(72) Erfinder: HANNEMANN, Frank, 91341 Röttenbach (DE); SCHMIED, Stefan, 91238 Offenhausen (DE); VOLKMANN, Andreas, 91052 Erlangen (DE)
(86) Internationale Anmeldenummer: PCT/EP2020/077190
(87) Internationale Veröffentlichungsnummer: WO 2021/089245

(56) Entgegenhaltungen:
- WO-A1-2019/011475
- JP-A- 2001 057 222
- US-A- 5 900 330
- US-A1- 2002 051 898
- US-A1- 2011 180 396

## Beschreibung

Die Erfindung betrifft eine Power-to-X-Anlage mit einem Elektrolyseur und einem Energiewandler sowie ein Verfahren zu deren Betrieb. Power-to-X bezeichnet unterschiedliche Möglichkeiten der Nutzung (insbesondere Speicherung) im Falle eines Überangebots erneuerbarer Energie aus Sonne, Wind und Wasserkraft.

Ein Teil dieser Technologien sind die Power-to-Gas-Prozesse, welche ein wesentliches Element zur Dekarbonisierung oder Defossilierung des Transport- und Energiesektors sein können und auch zur Energiespeicherung verwendet werden. Ein wesentlicher Vorteil gegenüber anderen Speichertechnologien stellt dabei die hohe Energiedichte von Wasserstoff oder anderer Kohlenwasserstoffe dar.

Für die Rückverstromung des Wasserstoffes werden heute im Wesentlichen Verbrennungsanlagen wie z.B. Gasturbinen oder Dampfkessel verwendet, was den Wirkungsgrad der Gesamtkette von der Erzeugung des Wasserstoffes durch die Elektrolyse über die Verdichtung, Reinigung und Speicherung des Wasserstoffes bis hin zur Rückverstromung z.B. in einer Gasturbine nur auf einem sehr niedrigen Niveau unter 30% ermöglicht.

Ein weiterer Nachteil der Rückverstromung über eine Verbrennungsanlage, wie z.B. bei einem Gas- und Dampfturbinenkraftwerk, ist die eingeschränkte Flexibilität mit langen An- und Abfahrzeiten sowie Leistungsgradienten, was speziell bei der Kompensation und Speicherung von regenerativer Energie einen entscheidenden Nachteil darstellt.

Im Gegensatz dazu verspricht die Brennstoffzelle sowohl eine hohe Flexibilität als auch einen höheren Wirkungsgrad und kann dadurch die schwankende Verfügbarkeit von erneuerbarer Energie besser ausnutzen. Dem stehen heute die hohen Investitionskosten der Gesamtkette der Brennstoffzellenanwendung in Verbindung mit Elektrolyse als Nachteil gegenüber.

Heutige Anwendungen kommen daher nur im Verkehrsbereich zum Einsatz. Für eine Speicherung im Lastkraftwagen oder Kraftfahrzeug müssen extrem hohe Energiedichten realisiert werden, um die Speichervolumina begrenzen zu können und hohe Fahrleistungen zu ermöglichen. Dies kann bei Wasserstoff nur über hohe Drücke zwischen 350-750bar ermöglicht werden. Um bei diesen hohen Drücken Korrosion durch Wasserdampf oder Sauerstoff sicher zu vermeiden, muss der Wasserstoff gereinigt und Wasserdampf und Sauerstoff vollständig entfernt werden. Diese Reinigung ist nur über Trocknung (Kälte- und Adsorptionstrocknung) und katalytische Sauerstoff-Entfernung möglich, was einerseits zu einem hohen Investitionsaufwand und andererseits zu Wasserstoffverlusten durch die katalytische Reaktion führt. Aufgrund dieser aufwendigen Reinigung sind stationäre Anlagen bestehend aus Elektrolyse und Brennstoffzelle heute oft noch nicht wirtschaftlich.

Bisher wird die Speicherung und Rückverstromung von Wasserstoff mit einem der mobilen Anwendung vergleichbaren Anlagenkonzept realisiert. Eine Anlage zur Speicherung und Rückverstromung von regenerativer Energie umfasst eine Elektrolyse, einen optionalen Verdichter, einen katalytischen Sauerstoff-Entferner, eine Abkühleinrichtung mit Wasserabscheider, einen Adsorber, einen weiteren Verdichter, einen Speicher und eine Brennstoffzelle mit Befeuchter. Aufgrund des komplexen Anlagenkonzeptes und des hohen Speicherdruckes sind die Investitionskosten für stationäre Anwendungen sehr hoch und ein wirtschaftlicher Betrieb ist nur bei sehr hohen Einspeisetarifen bei der Rückverstromung und sehr niedrigen Strompreisen für die Erzeugung von Wasserstoff möglich.

Dokument US 5 900 330 A offenbart eine Power-to-X-Anlage aus dem Stand der Technik.

Aufgabe der Erfindung ist es, eine Power-to-X-Anlage bereitzustellen, die eine Prozessvereinfachung ermöglicht und hilft, Investitionskosten in signifikanter Höhe zu reduzieren. Eine weitere Aufgabe der Erfindung ist es, ein entsprechendes Verfahren zum Betrieb einer solchen Anlage anzugeben.

Die Erfindung löst die auf eine Power-to-X-Anlage gerichtete Aufgabe, indem sie vorsieht, dass bei einer derartigen Anlage mit einem Elektrolyseur und einem Energiewandler, die über eine Wasserstoffleitung miteinander verbunden sind, weiter umfassend einen chemischer Reaktor zur katalytischen Sauerstoffentfernung, einen ersten Wärmeübertrager, einen Wasserabscheider, einen Speicher sowie einen Befeuchter, die in der Reihenfolge der Aufzählung hintereinander zwischen Elektrolyseur und Energiewandler in die Wasserstoffleitung geschaltet sind, ein zweiter Wärmeübertrager so in der Wasserstoffleitung angeordnet ist, dass eine erste Seite des zweiten Wärmeübertragers vor dem ersten Wärmeübertrager und eine zweite Seite des zweiten Wärmeübertragers nach dem Wasserabscheider in der Wasserstoffleitung angeordnet ist.

Erfindungsgemäß wird die Speicherung des Wasserstoffes auf einem Druckniveau durchgeführt, welches durch die Elektrolyse und ohne Nutzung eines zusätzlichen Verdichters erreichbar ist. Durch Absenkung des Druckes ist es möglich, die Reinheitsanforderungen an den Wasserstoff zu reduzieren, da bei niedrigen Drücken (z.B. <40bar) mit geringerer Korrosionsneigung bei Kondensation des Wasseranteiles und vorhandenem Restsauerstoff aus der Elektrolyse zu rechnen ist.

Der in der Elektrolyse erzeugte Wasserstoff wird zunächst von Restsauerstoff durch katalytische Oxidation des Sauerstoffes mit Wasserstoff befreit. Der Wasseranteil und die damit verbundene Wassermenge steigen innerhalb des Wasserstoffstromes durch diese Reaktion an. Die Temperatur am Austritt der katalytischen Sauerstoffentfernung beträgt beispielsweise zwischen 60°C und 80°C und eine vollständige Sättigung des Wasserstoffstromes stellt sich ein.

Zum Einsatz kostengünstiger und weniger korrosionsbeständiger Materialien ist daher eine Überhitzung des Wasserstoffes notwendig. Diese Überhitzung wird gemäß der Erfindung durch Wärmerückgewinnung bzw. Rekuperation verbunden mit einer zwischengeschalteten Temperaturreduzierung auf beispielsweise 5°C erreicht.

Mit der Abkühlung über den ersten Wärmeübertrager reduziert sich der Taupunkt und Wasser kondensiert aus. Der Wasserstoff enthält damit weniger Wasser und befindet sich im Sättigungszustand bei niedriger Temperatur.

Schließlich wird der abgekühlte Wasserstoffstrom über den zweiten Wärmeübertrager (Rekuperator) aufgewärmt und in den Speicher geleitet, wobei Wasserstofftemperaturen über 50°C erreicht werden können. Durch Anhebung der Temperatur überhitzt der Wasserstoff und eine Kondensation von Wasser im Speicher und den verbindenden Rohrleitungen kann somit ausgeschlossen werden.

Zweckmäßiger Weise ist der Energiewandler eine Brennstoffzelle.

In einer vorteilhaften Ausführungsform ist der erste Wärmeübertrager mit einer Kälteeinheit (Chiller) verbunden. Dies führt zu einer signifikanten Abkühlung des Wasserstoffstroms und somit auch zu einer signifikanten Trocknung, da Wasser in nennenswerter Menge auskondensiert.

In einer alternativen vorteilhaften Ausführungsform der Erfindung ist eine Kühlwasserleitung mit dem ersten Wärmeübertrager verbunden. Durch den mit Kühlwasser betriebenen ersten Wärmeübertrager ist im Vergleich zur Verwendung einer Kälteeinheit nur noch eine geringere Reduzierung der Wasserstofftemperatur auf z.B. < 30°C möglich und es kondensiert weniger Wasserdampf aus und die Sättigungstemperatur bzw. der Taupunkt liegen auf höherem Temperaturniveau. Damit besteht ein höheres Risiko, dass diese Temperatur im Speicher unterschritten wird, Wasser auskondensiert und Korrosion auftreten kann. Um Korrosion bei dieser Ausführungsform sicher zu vermeiden, muss entweder ein höherwertiges und korrosionsresistentes Material eingesetzt werden oder eine höhere Temperatur durch z.B. eine Begleitheizung oder anderen geeigneten Maßnahmen sichergestellt werden. Durch die höhere Sättigungstemperatur und damit verbundenen Wassergehalt ist bei dieser Ausführungsform aber auch eine geringere Aufsättigung des Wasserstoffstromes vor Eintritt in die Brennstoffzelle notwendig.

In vorteilhafterweise kann der nach dem ersten Wärmeübertrager auskondensierte Wasseranteil für eine Befeuchtung des Wasserstoffstromes vor Eintritt in die Brennstoffzelle wiederverwendet werden. Zu diesem Zweck sind der Wasserabscheider und der Befeuchter über eine erste Wasserleitung miteinander verbunden. Dabei ist es zweckmäßig, wenn ferner eine zweite Wasserleitung in den Befeuchter mündet, für den Fall, dass die abgeschiedene Wassermenge nicht ausreicht, um den ausgespeicherten Wasserstoff für eine optimale Verwendung in der Brennstoffzelle zu befeuchten.

Die auf ein Verfahren gerichtete Aufgabe wird gelöst durch ein Verfahren zur Speicherung und flexiblen Nutzung erneuerbarer Energien, mit folgenden Schritten:
- zerlegen von Wasser in Wasserstoff und Sauerstoff durch Zuführen elektrischer Energie,
- befreien des erzeugten Wasserstoffs von Restsauerstoff durch eine katalytische Oxidation des Sauerstoffes mit Wasserstoff,
- kühlen des Wasserstoffes durch indirekte Wärmeübertragung auf ein Kühlmedium,
- abscheiden von Wasser aus dem gekühlten Wasserstoff,
- einspeichern des Wasserstoffes,
- ausspeichern und befeuchten des Wasserstoffes und
- zuführen des befeuchteten Wasserstoffes zu einem Energiewandler,
wobei dem Wasserstoff vor dem Kühlen mit dem Kühlmedium Wärme entzogen wird und die entzogene Wärme rekuperativ zur Erwärmung des Wasserstoffs nach dem Abscheiden von Wasser genutzt wird.

Die mit dem erfinderischen Verfahren verbundenen Vorteile sind dieselben, wie bei der erfinderischen Vorrichtung.

Dabei ist es vorteilhaft, wenn aus Wasserstoff abgeschiedenes Wasser dazu verwendet wird, ausgespeicherten Wasserstoff zu befeuchten, bevor chemische in elektrische Energie gewandelt wird.

Es ist weiterhin vorteilhaft, wenn ein Kühlmedium eine Kälteeinheit durchläuft, bevor es zum Kühlen des Wasserstoffes verwendet wird.

Alternativ kann es vorteilhaft sein, wenn als Kühlmedium Kühlwasser verwendet wird.

Die Erfindung wird beispielhaft anhand der Zeichnungen näher erläutert. Es zeigen schematisch und nicht maßstäblich:
Figur 1 Power-to-X-Anlage mit einem Elektrolyseur und einem Energiewandler nach dem Stand der Technik und
Figur 2 Power-to-X-Anlage mit einem Elektrolyseur und einem Energiewandler nach der Erfindung.

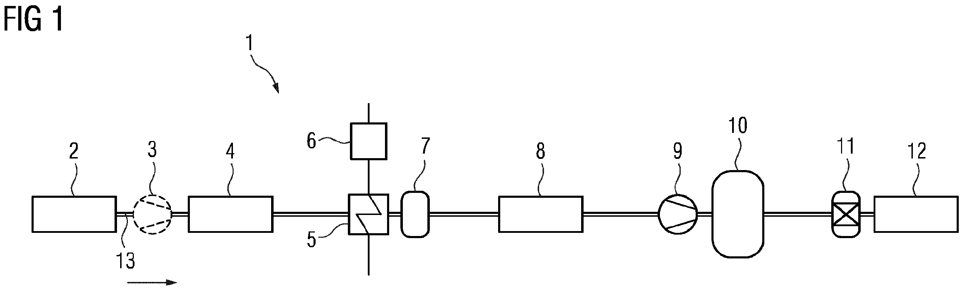

Die Figur 1 zeigt schematisch und beispielhaft eine Power-to-X-Anlage 1 zur Speicherung und Rückverstromung von regenerativer Energie nach dem Stand der Technik. Die Power-to-X-Anlage 1 umfasst einen Elektrolyseur 2, einen ersten Verdichter 3, einen chemischen Reaktor 4 zur katalytischen Sauerstoffentfernung , einen ersten Wärmeübertrager 5 als Abkühleinrichtung mit einer vorgeschalteten Kälteeinheit 6 (Chiller) sowie mit Wasserabscheider 7, einen Adsorber 8, einen zweiten Verdichter 9, einen Speicher 10 und eine Brennstoffzelle als Energiewandler 12 mit Befeuchter 11. Diese Komponenten sind untereinander über eine Wasserstoffleitung 13 verbunden.

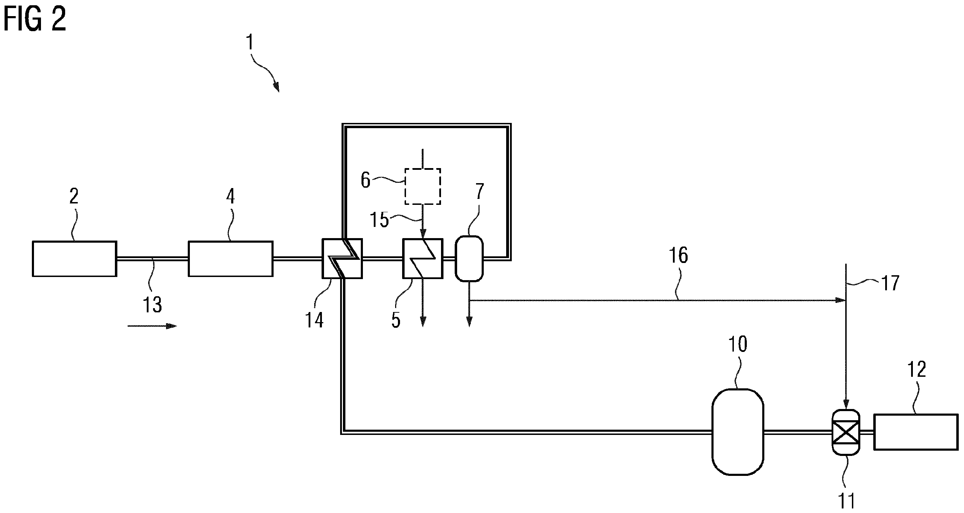

Figur 2 zeigt eine Power-to-X-Anlage 1 mit einem Elektrolyseur 2 und einem Energiewandler 11 nach der Erfindung. Im Unterschied zum Stand der Technik der Figur 1 wird die Speicherung des Wasserstoffes auf einem Druckniveau durchgeführt, welches durch die Elektrolyse und ohne Nutzung eines ersten Verdichters 3 erreichbar ist.

In einem ersten Schritt wird also in der Power-to-X-Anlage 1 nach der Erfindung der im Elektrolyseur 2 erzeugte Wasserstoff von Restsauerstoff durch katalytische Oxidation in einem katalytischen Sauerstoff-Entferner 4 befreit, ohne vorher verdichtet worden zu sein.

Anschließend erfolgt in einem zweiten Wärmeübertrager 14 beim ersten Durchlaufen eine Abkühlung und beim zweiten Durchlaufen eine Erwärmung des Wasserstoffstroms. Dieser Wärmerückgewinnung oder Rekuperation sind eine Temperaturreduzierung des Wasserstoffstromes im ersten Wärmeübertrager 5 (wahlweise mit vorgeschalteter Kälteeinheit 6 oder lediglich über eine Kühlwasserleitung 15) sowie ein Wasserabscheider 7 zwischengeschaltet.

Im nächsten Schritt wird der Wasserstoffstrom in den Speicher 10 geleitet.

Der nach dem ersten Wärmeübertrager 5 auskondensierte und im Wasserabscheider 7 vom Wasserstoffstrom entfernte Wasseranteil kann für eine Befeuchtung des Wasserstoffstromes im dem Energiewandler 12 (Brennstoffzelle) vorgeschalteten Befeuchter 11 wiederverwendet werden.

## Patentansprüche

1. Power-to-X-Anlage (1) mit einem Elektrolyseur (2) und einem Energiewandler (12), die über eine Wasserstoffleitung (13) miteinander verbunden sind, weiter umfassend einen chemischen Reaktor (4) zur katalytischen Sauerstoffentfernung, einen ersten Wärmeübertrager (5), einen Wasserabscheider (7), einen Speicher (10) sowie einen Befeuchter (11), die in der Reihenfolge der Aufzählung hintereinander zwischen Elektrolyseur (2) und Energiewandler (12) in die Wasserstoffleitung (13) geschaltet sind, **dadurch gekennzeichnet, dass** ein zweiter Wärmeübertrager (14) so in der Wasserstoffleitung (13) angeordnet ist, dass eine erste Seite des zweiten Wärmeübertragers (14) vor dem ersten Wärmeübertrager (5) und eine zweite Seite des zweiten Wärmeübertragers (14) nach dem Wasserabscheider (7) in der Wasserstoffleitung (13) angeordnet ist.

2. Power-to-X-Anlage (1) nach Anspruch 1, wobei der Energiewandler (12) eine Brennstoffzelle ist.

3. Power-to-X-Anlage (1) nach einem der Ansprüche 1 oder 2, wobei der erste Wärmeübertrager (5) mit einer Kälteeinheit (6) verbunden ist.

4. Power-to-X-Anlage (1) nach einem der Ansprüche 1 oder 2, wobei eine Kühlwasserleitung (15) mit dem ersten Wärmeübertrager (5) verbunden ist.

5. Power-to-X-Anlage (1) nach einem der vorhergehenden Ansprüche, wobei der Wasserabscheider (7) und der Befeuchter (11) über eine erste Wasserleitung (16) miteinander verbunden sind.

6. Power-to-X-Anlage (1) nach Anspruch 5, wobei eine zweite Wasserleitung (17) in den Befeuchter (11) mündet.

7. Verfahren zur Speicherung und flexiblen Nutzung erneuerbarer Energien, mit folgenden Schritten:
• Zerlegen von Wasser in Wasserstoff und Sauerstoff durch Zuführen elektrischer Energie,
• befreien des erzeugten Wasserstoffs von Restsauerstoff durch eine katalytische Oxidation des Sauerstoffes mit Wasserstoff,
• kühlen des Wasserstoffs durch indirekte Wärmeübertragung auf ein Kühlmedium,
• abscheiden von Wasser aus dem gekühlten Wasserstoff,
• einspeichern des Wasserstoffs,
• ausspeichern und befeuchten des Wasserstoffs und
• wandeln von chemischer in elektrische Energie mittels des befeuchteten Wasserstoffs,
**dadurch gekennzeichnet, dass** dem Wasserstoff vor dem Kühlen mit dem Kühlmedium Wärme entzogen wird und die entzogene Wärme rekuperativ zur Erwärmung des Wasserstoffs nach dem Abscheiden von Wasser und vor dem Einspeichern genutzt wird.

8. Verfahren nach Anspruch 7, wobei aus Wasserstoff abgeschiedenes Wasser dazu verwendet wird, ausgespeicherten Wasserstoff zu befeuchten, bevor chemische in elektrische Energie gewandelt wird.

9. Verfahren nach einem der Ansprüche 7 oder 8, wobei ein Kühlmedium eine Kälteeinheit (6) durchläuft, bevor es zum Kühlen des Wasserstoffes verwendet wird.

10. Verfahren nach einem der Ansprüche 7 oder 8, wobei als Kühlmedium Kühlwasser verwendet wird.

## Claims

1. Power-to-X plant (1) comprising an electrolyzer (2) and an energy converter (12) connected to one another via a hydrogen conduit (13) and further comprising a chemical reactor (4) for catalytic oxygen removal, a first heat exchanger (5), a water separator (7), a storage means (10) and a humidifier (11) serially connected into the hydrogen conduit (13) between the electrolyzer (2) and the energy converter (12) in the sequence listed, **characterized in that** a second heat exchanger (14) is arranged in the hydrogen conduit (13) such that a first side of the second heat exchanger (14) is arranged upstream of the first heat exchanger (5) and a second side of the second heat exchanger (14) is arranged downstream of the water separator (7) in the hydrogen conduit (13).

2. Power-to-X plant (1) according to Claim 1, wherein the energy converter (12) is a fuel cell.

3. Power-to-X plant (1) according to either of Claims 1 or 2, wherein the first heat exchanger (5) is connected to a refrigeration unit (6).

4. Power-to-X plant (1) according to either of Claims 1 or 2, wherein a cooling water conduit (15) is connected to the first heat exchanger (5).

5. Power-to-X plant (1) according to any of the preceding claims, wherein the water separator (7) and the humidifier (11) are connected to one another via a first water conduit (16) .

6. Power-to-X plant (1) according to Claim 5, wherein a second water conduit (17) leads to the humidifier (11).

7. Process for storage and flexible utilization of renewable energy comprising the steps of:
• decomposing water into hydrogen and oxygen by supplying electrical energy,
• freeing the hydrogen produced from residual oxygen by catalytic oxidation of the oxygen with hydrogen,
• cooling the hydrogen by indirect heat transfer to a cooling medium,
• separating water from the cooled hydrogen,
• storing the hydrogen,
• retrieving and humidifying the hydrogen and
• converting chemical energy into electrical energy by means of the humidified hydrogen,
**characterized in that** heat is removed from the hydrogen before the cooling with the cooling medium and the heat removed is utilized recuperatively for heating the hydrogen after the separating of water and before the storing.

8. Process according to Claim 7, wherein water separated from hydrogen is used for humidifying retrieved hydrogen before chemical energy is converted into electrical energy.

9. Process according to either of Claims 7 or 8, wherein a cooling medium passes through a refrigeration unit (6) before it is used for cooling the hydrogen.

10. Process according to either of Claims 7 or 8, wherein cooling water is used as the cooling medium.

## Revendications

1. Système (1) Power-to-X comprenant un électrolyseur (2) et un convertisseur (12) d'énergie, qui communiquent entre eux par un conduit (13) pour de l'hydrogène, comprenant en outre un réacteur (4) chimique pour l'élimination catalytique de l'oxygène, un premier échangeur de chaleur (5), un séparateur (7) d'eau, un accumulateur (10), ainsi qu'un humidificateur (11), qui sont montés, dans l'ordre de l'énumération, entre l'électrolyseur (2) et le convertisseur (12) d'énergie dans le conduit (13) pour de l'hydrogène, les uns derrière les autres dans la suite de l'énumération, **caractérisé en ce qu'**un deuxième échangeur de chaleur (14) est monté dans le conduit (13) pour de l'hydrogène de manière à ce qu'un premier côté du deuxième échangeur de chaleur (14) soit monté avant le premier échangeur de chaleur (5) et qu'un deuxième côté du deuxième échangeur de chaleur (14) soit monté après le séparateur (7) d'eau dans le conduit (13) pour de l'hydrogène.

2. Système (1) Power-to-X suivant la revendication 1, dans lequel le convertisseur (12) d'énergie est une pile à combustible.

3. Système (1) Power-to-X suivant l'une des revendications 1 ou 2, dans lequel le premier échangeur de chaleur (5) est relié à une unité (6) de réfrigération.

4. Système (1) Power-to-X suivant l'une des revendications 1 ou 2, dans lequel un conduit (15) pour de l'eau de refroidissement est relié au premier échangeur de chaleur (5) .

5. Système (1) Power-to-X suivant l'une des revendications précédentes, dans lequel le séparateur (7) d'eau et l'humidificateur (11) sont reliés entre eux par un conduit (16) pour de l'eau.

6. Système (1) Power-to-X suivant la revendication 5, dans lequel un deuxième conduit (17) pour de l'eau débouche dans l'humidificateur (11).

7. Procédé d'accumulation et d'utilisation flexible d'énergie renouvelable comprenant les stades suivants :
• on décompose de l'eau en de l'hydrogène et en de l'oxygène par apport d'énergie électrique,
• on débarrasse l'hydrogène produit d'oxygène résiduel par une oxydation catalytique de l'oxygène avec l'hydrogène,
• on refroidit l'hydrogène par transmission de chaleur indirecte à un fluide de refroidissement,
• on sépare de l'eau de l'hydrogène refroidi,
• on stocke l'hydrogène,
• on déstocke et on humidifie l'hydrogène et
• on transforme de l'énergie chimique en énergie électrique au moyen de l'hydrogène humidifié,
**caractérisé en ce que** l'on retire de la chaleur de l'hydrogène, avant le refroidissement par le fluide de refroidissement, et on utilise la chaleur retirée récupérativement pour réchauffer l'hydrogène après la séparation de l'eau et avant le stockage.

8. Procédé suivant la revendication 7, dans lequel on utilise de l'eau séparée de l'hydrogène pour humidifier de l'hydrogène déstocké, avant de transformer de l'énergie chimique en énergie électrique.

9. Procédé suivant l'une des revendications 7 ou 8, dans lequel un fluide de refroidissement passe dans l'unité (6) de réfrigération, avant d'être utilisé pour le refroidissement de l'hydrogène.

10. Procédé suivant l'une des revendications 7 ou 8, dans lequel on utilise de l'eau de refroidissement comme fluide de refroidissement.
